# EUROPEAN PATENT APPLICATION

(11) **EP 3 912 687 A1**
(43) Date of publication of application: **24.11.2021**
(21) Application number: 21161198.3
(22) Date of filing: 08.03.2021
(51) Int. Cl.: A62B 7/10, A62B 18/02, A62B 23/02, B01D 46/10

(54) **FACE MASK WITHFILTER MEDIUMMADE FROM MULTICOMPONENT FILAMENTS**

(30) Priority: 20.05.2020 EP 20175750
(71) Applicant: Carl Freudenberg KG, 69469 Weinheim (DE)
(72) Inventor: Kerhault, Jean-Francois, 67661 Kaiserslautern (DE); Gödicke, Birgit, Dr., 67661 Kaiserslautern (DE); Khedimi, Achraf, 68027Colmar (FR)

(57) **Abstract**

The invention relates to a face mask for protection against infectious agents with a filter medium from spun nonwoven, which consists of multicomponent filaments, which are split at least partially into elementary filaments, wherein optionally at least one further layer is present, which is not a filter medium. The invention also relates to uses of filter masks and face masks.

## Description

The invention relates to a face mask with a filter medium from multicomponent filaments, and uses thereof.

### State of the art

Various types of face masks are available for respiratory protection. Filtering half masks (FFP = Filtering Face Piece) are articles of personal protective equipment (PPE) and have the purpose to protect the wearer from particles and aerosols. The design of filtrating half masks is subject to variations. Masks are available with or without exhalation valve. Masks without a valve can filter the incoming and outgoing air, thereby providing protection for the wearer and for others. Masks with a valve can only filter incoming air and are thus not designed for protecting others. Properties and requirements of filtering half masks are defined in the standard DIN EN 149:2001-10.

Medical face masks (mouth and nose protection, MNP, face mask, mouth protection, surgical mask) are used predominantly for protection of others against exposition to possibly infectious aerosols from the person carrying the face mask. When tightly fitted, they can also provide protection for the wearer, which is however not the primary purpose of the mask. The standard DIN EN 14683:2019 is pertinent for medical half masks. Medical half masks are not only used in medical applications, but also in everyday life. Medical masks can be worn by patients and other persons for reducing the risk of spreading an infection, especially in an epidemic or pandemic situation. Medical face masks are of high relevance for medical staff and the public against COVID-19 disease, which is caused by the coronavirus SARS-CoV2.

In the state of the art, medical face masks typically have a three-layer structure. Frequently, this is composed of a polypropylene spun nonwoven as a support layer, an electrostatically charged central filter layer from meltblown microfibers, and a cover layer from polypropylene spun nonwoven. Only the medium filter layer, which is characterized by highly fine meltblown microfibers, contributes to the removal of aerosols. The support layer is directed towards the mouth and provides only mechanical protection. The outer cover layer also provides mechanical protection for the filter layer. It is common practice that the filter layer is electrically charged for increasing the filtration efficiency.

The filtration efficiency of the filter layer defines the performance class and the pressure drop/breathing resistance of the face mask. DIN EN 14683:2019 defines different performance classes as follows:

**Table 1 - Performance requirements for medical face masks**

| Test | Type I | Type II | Type IIR |
|---|---|---|---|
| Bacterial filtration efficiency (BFE) [%] | ≥ 95 | ≥ 98 | ≥ 98 |
| Differential pressure [Pa/cm²] | < 40 | < 40 | < 60 |

The standard suggests that medical face masks of type I should be used only for patients and other persons for reducing the risk of spreading an infection, especially in epidemic or pandemic situations. Masks of type I are not intended for medical staff in operation rooms or other medical institutions with similar requirements.

Common face masks have various disadvantages. Especially in view of the COVID-19 pandemic, there is still a high need for providing face masks having high filtration efficiency and wearer comfort, but which are at the same time inexpensive and easily available, to medical staff, persons having intense contact to others and the public. Generally, also the ratio of the contradictive properties filtration efficiency and air permeability could still be improved for known masks. It is another known problem that masks having a high filtration efficiency can often be used only once, because the filtration efficiency is reduced by washing. This problem is especially known for filter media, which are electrically charged or comprise highly fine meltblown fibers.

Spun nonwovens consisting of split multicomponent filaments are known in the art. They are provided by the company Freudenberg, DE, under the trademark Evolon, for various applications, and are described for example in EP 3 165 655 B1 or DE 10 2004 036 099 A1.

US 2018/0361295 A1 relates to a filter cartridge comprising a casing, in which a filter medium is inserted which is attached to the casing at multiple sides and sealed.

US 5,817,584 relates to a face mask fabric, wherein the first layer consists of thermally bonded multicomponent filaments and a second layer comprise additional microfibers, especially meltblown fibers.

### Problem of the invention

The problem of the invention is to provide face masks for protection against infectious agents, which overcome the above mentioned disadvantages. Especially, face masks shall be provided, which are available conveniently, in a simple manner and in high amounts. The face masks shall have a high filtration efficiency and provide high user comfort, whereas the air permeability shall be high such that the breathing resistance is low. Preferably, the face masks shall be re-usable and washable without decrease of filtering properties.

### Disclosure of the invention

Surprisingly, the problem underlying the invention is solved by face masks and uses according to the claims. Subject of the invention is a face mask for protection against infectious agents with a filter medium from spun nonwoven, which consists of multicomponent filaments, which are split at least partially into elementary filaments, wherein the face mask optionally comprises at least one further layer which is not a filter medium.

A face mask is a mask which covers mouth and nose, thereby providing a barrier against direct transmission of infectious agents. Such face masks are also referred to as medical masks or surgical masks. Typically, the mask is a half mask.

The face mask shall protect the wearer and/or others from infectious agents. Infectious agents are typically germs, normally bacteria or viruses. Typically, such face masks filter aerosol particles out of breathing air. Generally, aerosols are suspensions of liquid particles (droplets) or fine solid particles in air or another gas. The particle diameters are typically in the range of 0.1 to 10 µm. Breathing air may comprise liquid aerosol particles, typically in the form of droplets, which may comprise infectious agents. The aerosols can be released from the mouth of humans, for example during speaking, breathing or sneezing.

The face mask comprises a filter medium. The term "filter medium" refers to the part of the face mask, which mechanically or physically separates or removes aerosol particles in liquid or solid form from the inhaled or exhaled air. The filter medium is a flat layer, through which the breathing air passes, such that the undesired components are removed from the breathing air.

The filter medium consists of a spun nonwoven. The spun nonwoven consists of multicomponent filaments, which are split at least partially into elementary filaments. The filter medium may comprise two or more layers of the spun nonwoven. The face mask does not comprise a further, additional filter medium. Optionally, the face mask may comprise an additional flat layer, which is not a filter medium, but which is also traversed by the breathing air. Preferably, such a layer is a support layer or cover layer. Overall, the face mask is characterized in that the filter medium is structured and obtainable in a simple manner, because it consists only of one type of spun nonwoven.

Surprisingly, it was found that the inventive face mask with the filter medium from spun nonwoven from split multicomponent filaments can combine high filtration efficiency with high breathing activity. This is advantageous, because it is generally difficult to bring these opposite parameters into accordance with each other. In the art, it is generally observed that the filtration efficiency of fiber materials tends to be relatively low, if air permeability is relatively high, and vice versa. The inventive advantages are achieved, although the filter medium does not comprise a layer of meltblown fibers, as conventional products in the prior art do. Moreover, it is not required that the filter medium is electrostatically charged, which is also common in the art for sufficient filtration efficiency. Overall, it is advantageous that the production can be simplified and that an efficient face mask can be provided, which consists of only relatively few components.

It is another advantage of the invention that additional layers, such as support or cover layers, are not required. In case of a multi-layer structure of the filter medium, the outer layers could also function as cover layers, which simplifies mask production significantly.

Surprisingly, it was found that the inventive filter medium has a low differential pressure (pressure drop) at high filtration efficiency, and thus a low breathing resistance. Thereby, the comfort of the mask for the wearer is significantly increased without significant loss of performance. This is especially relevant at a work place, such as a production site, in gastronomy or the retail sector, during exercise, especially sport, or in crowd gatherings. The face mask is thus highly suited for persons who are not medical staff.

Typically, the face mask comprises fixation means for attachment over the mouth and chin of the wearer. For example, means such as ribbons or clips can ensure that the mask is tightly aligned to the sides of the face. Face masks can have various forms and structures, and may comprise additional features such as a face protection, for protecting the wearer from splashes or drops, an anti-fog function, or a nose clip for adjusting the mask to the form of the nose. The filter medium may be fixed in a frame or by other means.

The filter medium is a spun nonwoven from at least partially split multicomponent filaments. The filter medium may consist of a single layer of spun nonwoven or of multiple layers of spun nonwoven which are flatly laid on each other.

Spun nonwovens are nonwovens from continuous fibers, which are spun from polymer melts and drawn, laid to a nonwoven precursor (felt), and bonded to each other to form the nonwoven. In the spinning process, continuous filaments are obtained, also referred to as endless filaments (in contrast to staple fibers of defined). The fibers used in the inventive filter medium are preferably continuous filaments and not staple fibers. As used herein, the terms fiber and filament are used as synonyms. The spun nonwoven is a nonwoven fabric or sheet. By definition, the fibers in a nonwoven can be bonded by friction, adhesion and/or cohesion. Typically, the nonwoven fibers have random orientation. Preferably, the nonwoven is a textile product as defined in ISO 9092:1988.

Spun nonwovens are preferred as filter media in a face mask, because they are relatively stable, do not exhibit significant particle loss and have a relatively smooth surface. Especially spun nonwovens from finely split multicomponent filaments are relatively soft and elastic and can thereby confer to the wearer a high comfort on the skin.

The spun nonwovens consist of multicomponent filaments. The multicomponent filaments are splittable. They are split at least in part into elementary filaments (monofilaments). Splittable multicomponent filaments consist of at least two different elementary filaments, which are aligned to each other in parallel. They have a phase interphase between each other and are adhered to each other in a splittable manner along the filament length. The adhesive forces are relatively loose. The multicomponent filaments are preferably spilt into elementary filaments mechanically. A fluid jet treatment, which is typically a water jet treatment, is especially suited, as it consolidates the spun nonwoven at the same time. Spun nonwovens, which have been treated accordingly, are characterized by regions, in which the multicomponent filaments are split only partially or not at all. The ratio of split filaments can be increased by time and/or energy applied. When applying a sufficiently long and/or energetic fluid jet treatment, spun nonwovens are obtainable which consist almost exclusively of elementary filaments. Preferably, at least 60%, especially at least 80%, at least 90% or at least 95% of all filaments in the nonwoven are elementary filaments, based on the total weight of the filaments. The ratio of split filaments can be determined by microscopic analysis of multiple randomly chosen areas of the nonwoven.

In contrast, bicomponent filaments of the core/sheath type are generally not splittable. They are typically used for adhesively bonding the bicomponent filaments to each other through the molten sheath component.

In a preferred embodiment, the elementary filaments have a titer in the range of 0.01 dtex to 2.0 dtex, preferably between 0.02 dtex and 1 dtex. It is especially preferred that the titer is between 0.03 dtex and 0.6 dtex, and thereby especially between 0.05 dtex and 0.4 dtex, or more preferred between 0.075 and 0.3 dtex. Especially good filtration and breathing properties can be obtained, when the titer is between 0.1 and 0.2 dtex. For example, elementary filaments having such low titers can be obtained by known methods from bicomponent filaments of type PIE 16. It was found that such filter media can have an especially high filtration efficiency and air permeability. Such monofilaments, which are obtained from split multicomponent filaments, are very fine and can also confer high elasticity and softness to the filter medium, thereby increasing the wearer comfort.

Preferably, the multicomponent filaments comprise two, three or more different polymer components. From each component, a defined elementary filament type is obtained by splitting. The spun nonwoven thus comprises at least two types of elementary filaments which are different from each other. Probably, the elementary filament types comprise different types of polymers. The elementary filament types may also comprise different titers. Preferably, the titer difference of the components is at least 0.02 dtex. By combining relatively fine and slightly thicker elementary filaments in a spun nonwoven, a higher filtration efficiency may be achieved. Preferably, the amount of each elementary filament type in the multicomponent filaments are identical. Preferably, the multicomponent filaments comprise two or three different components. Especially preferred are bicomponent filaments. In this regard, it is advantageous that a high splittability can be achieved, whereby the material has a relatively simple structure.

In a preferred embodiment, the filter medium consists of at least two layers of spun nonwoven. Preferably, the filter medium consists of two to eight layers, especially two to six layers. Preferably, the spun nonwoven consists of two, three, four or five layers. It is especially preferred that the filter medium consists of two, three or four layers. In one embodiment, two layers are present. In these embodiments, all layers are spun nonwovens from at least partially split multicomponent filaments. Surprisingly, it was found that a filter medium from two layers already comprises significantly better properties than a comparable filter medium of the same total base weight which comprises only a single layer. The filter medium from multiple layers does not only comprise a much higher bacterial filtration efficiency (BFE), but also a significantly higher air permeability.

In a preferred embodiment, the filter medium consists of three layers of spun nonwoven. Preferably, the filter medium consists of three to eight layers, especially three to six layers. Especially preferred is a spun nonwoven from three, four or five layers. Especially preferred is a filter medium from three or four layers. In these embodiments, all layers are spun nonwovens of at least partially split multicomponent filaments. Surprisingly, it was found that a filter medium of three or four more layers can have even better properties than a comparable filter medium of the same total base weight which consists of only one layer or two layers. Typically, the filter medium from three or more layers do not only have higher BFE, but also significantly higher air permeability. This effect is especially pronounced for three or four layers.

For practical considerations, it is preferred that the number of filter layers in the filter medium is not overly high. Therefore, it is preferred that the filter medium does not comprise more than four layers, or not more than five or not more than six layers. The reason is that such spun nonwovens should not be overly thin in order to provide good workability and efficient and uniform production. Thus, an overly high number of layers having a high thickness could lead to a relatively high total basis weight. In general, the production of a filter medium from a high number of layers could be relatively burdensome.

In order to provide stability to the face mask, the layers of the filter medium can be attached to each other by known means. It is preferred that the layers are attached to each other only loosely at least in some regions of the layers. This will result in an air gap between the layers. Preferably, the layers are attached to each other only in partial regions of the layers. The attachment can be evenly distributed over the area, or can be only or predominantly in peripheral regions of the layers. A connection in peripheral regions is preferred, because the air permeability is not reduced thereby. Additionally, connections may be present which are not in peripheral regions. The layers can be attached to each other by conventional techniques, such as sewing or adhesive bonding, especially ultrasonic bonding. A label for back-tracing or differentiation can be printed directly onto the filter medium without further surface treatment.

Preferably, the two, three, four or more layers of the filter medium are produced separately from each other, at least initially. The layers can subsequently be combined with each other. Accordingly, it can be ensured that the layers are discrete and that air gaps between layers are provided when the laminate structure is formed. Therefore, it is preferred that the layers are not laid onto each other in the same spinning procedure and/or from the same spinning sites. However, when a spinning device has multiple spinning sites, different layers of the spun nonwovens can be produced separately and in discrete form, which can be processed further and combined thereafter adequately, if desired in the same device.

In a preferred embodiment, the filter medium, which may comprise multiple layers, has a total basis weight (base weight, area weight) of 40 to 300 g/m², preferably from 50 to 200 g/m², and especially from 60 to 150 g/m². Preferably, the basis weight is at least 40 g/m² or at least 60 g/m², in order to achieve sufficient mechanical stability and BFE. Preferably, the basis weight is not more than 200 g/m², or especially not more than 150 g/m², in order to preserve sufficient air permeability. In this regard, the basis weight can be adjusted relatively low, if the elementary filaments are relatively fine. Surprisingly, such relatively low basis weights can be sufficient for a filter media which fulfill the requirements of medical face masks. Such a relatively light material can provide a high wear comfort, especially when the face mask is worn over extended time periods and/or during physical exercise.

In a preferred embodiment, each layer of the spun nonwoven has a basis weight of 10 to 100 g/m², preferably from 20 to 60 g/m², more preferably from 20 to 40 g/m². The layers may comprise identical or different basis weights. Preferably, the filter medium comprises two, three, four or five layers thereof. It was found that an especially high BFE and air permeability can be obtained if a filter medium consists of layers having such a basis weight.

In a preferred embodiment, the layers comprise different basis weights. By selecting defined base weights, the filter properties may be improved. Thereby, it is conceivable that the outer layer (of two or more layers) or both outer layers (of three or more layers) have lower basis weights than the other layer(s) in order to fulfill predominantly a protective function (as a cover layer). In another embodiment, the layers are identical, or they comprise at least the same basis weight and/or thickness. Identical layers can be advantageous, because an efficient filter medium is easily obtainable from a relatively low number of identical components.

In a preferred embodiment, the filter medium comprises at least two layers, wherein the fiber diameter of the inner layer is smaller than of at least one outer layer. This can be advantageous, because the outer layer(s) may confer relatively high stability to the filter medium, whereas the central layer/layers can have relatively high filtration efficiency. In case of at least three layers, it is preferred that both outer layers have a respective higher fiber diameter.

The spun nonwoven is obtainable in a spinning process in which the multicomponent filaments are laid to form a nonwoven, followed by splitting multicomponent filaments into elementary filaments, and consolidation of the nonwoven. In such a process, a typical nonwoven structure is obtained. During splitting into elementary filaments, generally a much closer entangling of the single filaments is obtained, when compared to respective nonwovens from monofilaments having the same titer. Split fiber nonwovens are also structurally characterized by partial regions, in which although the multicomponent filaments have been split, the elementary filaments are still aligned more or less in parallel. Overall, nonwovens obtained from split multicomponent filaments have a defined and unique structure which has advantageous properties.

Preferably, the multicomponent filaments are produced by melt-spinning. Thereby, thermoplastic polymers are molten and spun from the melt. This provides an especially simple and reliable method for producing spun nonwovens from multicomponent filaments.

In general, elementary filaments obtained by splitting multicomponent filaments have cross-sections which are not round, but rather have edges and irregular structures. This is advantageous, because irregularly shaped elementary filaments have relatively low mobility towards each other. In an especially preferred embodiment, the multicomponent filaments, especially bicomponent filaments, have a so called pie structure (PIE structure, orange structure). Pie structures are advantageous, because they can be split relatively easily. Bicomponent filaments with pie cross-section are split into elementary filaments having a pie or wedge-like structure, which increases the internal stability of the nonwoven.

Preferably, each multicomponent filament is formed from 8 to 64 elementary filaments. With known methods, bicomponent filaments having for example 8, 16, 24, 32, 48 or 64 segments are obtainable. Upon splitting, the multicomponent filaments fall apart into the respective number of elementary filaments (mono-filaments). The term "pie" thereby relates normally to the cross-section of the spinning nozzle, but describes the cross-section shape of the elementary filaments only approximately. Preferably, the bicomponent filaments have the same number of each elementary filament (for example, 8 elementary filaments of each type in a PIE16 bicomponent filament). The bicomponent filaments preferably comprise alternating mono-filaments. Also preferred are hollow-pie structures, which comprise a hollow space in axial direction.

Especially preferred are spun nonwovens from bicomponent filaments in pie form from 16 segments, which especially have a fiber titer of 0.05 to 4 dtex, wherein the total basis weight of the filter medium is preferably 75 to 200 g/m². It was found that a filter medium from such a spun nonwoven can have an especially high BFE and air permeability.

Preferably, the fiber forming polymers are thermoplastic. Preferably, they are selected from polyester, polyamide, polyolefin and/or polyurethane. Especially preferred are bicomponent filaments having a polyester component and a polyamide component.

It is preferred that the mono-component filaments are split as much as possible. Thereby, the homogeneity and fineness of the spun nonwoven can be increased, thereby increasing the filtration efficiency. In order to achieve a high splittability, it is advantageous that at least two elementary filaments comprise different thermoplastic polymers, which are preferably incompatible. Incompatible polymers in combination result in pairs of filaments which have no or only low adhesive bonding towards each other. As incompatible polymer pairs, preferably polyester, polyamide, polyolefin and/or polyurethane are used. Polymer pairs with a polyamide and a polyester, especially polyethylene terephthalate (PET), are especially preferred due to their low adhesiveness. Polymer pairs comprising at least one polyolefin are also preferred due to low adhesiveness. Especially preferred are combinations of one polyester, especially PET, polylactic acid and/or polybutylene terephthalate, with a polyamide (PA), especially polyamide 6, polyamide 66 or polyamide 46, if desired in combination with one or more of the above components, preferably polyolefins. Especially preferred is a combination of PET and polyamide 6, PET and polyamide 66. Further preferred are polymer pairs, which comprise at least one polyolefin, especially in combination with at least one polyester or polyamide. Preferred are thereby especially polyamide 6/polyethylene, PET/polyethylene, polypropylene/polyethylene, polyamide 6/polypropylene or PET/polypropylene. These combinations have relatively high splittability. In a preferred embodiment, the volume, length and/or weight ratio of the first to second elementary filaments is between 90:10 and 10:90, especially between 80:20 and 20:80.

The polymers are the fiber raw material of the filaments (the fiber forming component). The filaments may comprise conventional additives. The additives are not fiber raw materials, and typically not organic polymers. Additives can be added to the fiber polymers in order to modify their properties or improve workability. Suitable additives can be, for example, dies, fillers, antistatic agents, antimicrobial agents, such as copper, hydrophilic or hydrophobic modifiers or the like. For example, they can be present in an amount of up to 10 wt.%, preferably up to 5 wt.% or up to 2 wt.%, especially between 150 ppm and 10 wt.%, based on the total weight of the filaments.

Methods for producing suitable multicomponent filaments, which can be split into elementary filaments, are known in the art. The production of such filaments and nonwovens is described, for example, in EP 3 165 655 B1, FR 2 749 860 A, DE 10 2014 002 232 A1. The spun nonwovens can be produced, for example, with a spinning device of the trademark REICOFIL 4 (Reifenhauser, DE). In the following, suitable methods for producing filter media and spun nonwovens which can be used in the invention are described. If not disclosed otherwise, a layer of the spun nonwoven can be treated accordingly, or a filter medium consisting of multiple layers of the spun nonwoven.

The filter medium or spun nonwoven can be subjected to mechanical treatment, in which the multicomponent filaments are split at least partially into the elementary filaments. Preferably, the filter medium and/or the spun nonwoven is simultaneously consolidated thereby. Preferred is a fluid jet treatment, in which a fluid, such as a liquid or gas, operates under pressure on the nonwoven. Especially preferred is water jet treatment (hydroentanglement, water jet needling). Water is inexpensive and available in high amounts, and the nonwovens can be dried rapidly and without undesired residues. The filaments are split and admixed, thereby forming an intimate composite through friction and fiber locking. Thereby, a homogenous spun nonwoven can be obtained having high softness and elasticity. According to the invention, it is possible to consolidate each layer of the filter medium separately by fluid jet treatment, followed by a combination of the layers; or vice versa. The filter medium and/or spun nonwoven can be subjected to common post-treatments, such as drying and/or shrinking.

In addition, further consolidation treatments can be performed, such as mechanical consolidation steps. For example, a consolidation may be performed by calendering. In one embodiment, a pre-consolidation by calendering is performed, followed by water jet treatment. The calendering is preferably carried out at sufficiently low temperature, such that no thermal consolidation due to molten fibers occurs.

In another embodiment, the filter medium and/or spun nonwoven are thermally consolidated, especially in partial regions. A local consolidation in partial regions, which can be distributed evenly over the nonwoven area, can improve the stability. For example, the low consolidation can be provided by ultrasonic treatment and/or calendering in a spot pattern. However, in order to preserve the advantageous properties of the nonwoven, especially for a multi-layer structure, only a minor portion of the area of the nonwoven should be consolidated in this manner, typically less than 10% or less or 5% of the total area. In order to not unduly decrease the air permeability, the nonwoven could be thermally consolidated in an oven without applying pressure.

However, it is preferred that the filter medium and/or spun nonwoven are not thermally consolidated, and in this regard especially not thermally consolidated over the entire area. This means that the nonwoven has not been subjected to a temperature treatment over the entire area, in which the fibers or a melt adhesive has softened such that the fibers are adhered to each other. A non-thermally bonded nonwoven can be advantageous, as the porosity, softness and elasticity can be preserved. In contrast, thermal consolidation can change the mechanical properties in a manner which is not advantageous for the wearer on the skin. Especially, the nonwoven can become more rigid and less porous, thereby decreasing the air and moisture permeability.

However, the filter medium may comprise partial regions, especially peripheral regions, but also other regions, which could connect the layers with each other, or with other parts of the face mask, and/or which could stabilize the face mask; such as sealing seams, adhesive seams or regions sewed together. Such local fixing and connecting in peripheral regions does not affect the filter performance. It may not be regarded as consolidation of the filter medium or the spun nonwoven.

In a preferred embodiment, the filter medium and/or spun nonwoven are not chemically bonded. This means that the fibers are not bonded to each other by chemical reaction, which was performed after spinning. Accordingly, no covalent bonds were created between fibers. This has the advantage that the nonwoven remains sufficiently soft and elastic, and that there is no danger that the wearer inhales residual products or side products from the chemical reaction. In a preferred embodiment, the filter medium and/or spun nonwoven are not consolidated with additional binder. This would be relatively complicated and incur the risk that the binder becomes detached and is inhaled by the wearer. Preferably, the filter medium and/or spun nonwoven are not needled, and especially not needle-punched with needles. Such a needling or needle-punching process could be detrimental in that regions of lower fiber density can be formed, which have a higher porosity than desired such that the BFE of the filter medium could decrease. At the same time, relatively dense areas can be formed which decrease air permeability.

In a preferred embodiment, the filter medium and/or spun nonwoven are consolidated only by fluid jet treatment, especially by water jet treatment. Accordingly, no other consolidation treatment was performed, such as thermal bonding, chemical bonding or mechanical needling. It was found that the multicomponent filaments can be split efficiently by fluid jet treatment only, whereas a sufficient consolidation can be achieved.

It is a special advantage of the inventive face mask that it is washable and thus can be reused. Surprisingly, it was found that the filtration efficiency is not decreased even after repeated washing. Moreover, it was even found that the properties of the face mask, and surprisingly especially the filtration efficiency, can be improved by washing. Preferably, the BFE is not reduced and/or improved by at least 1%, more preferably improved by at least 2%, most preferably improved by at least 5%, after 10 household washing cycles according to DIN EN ISO 6339 at 60°C; or in another embodiment at 95°C.

Preferably, the face mask was washed at least once, preferably at least twice, more preferably at least five, or even at least ten times. In a preferred embodiment, the face mask is washed before being supplied to the user and/or worn by the user for the first time. Preferably, the face mask is worn between washing treatments (cycles), for example for at least an hour or day. Preferably, the washing is at elevated temperature, such as at least 40°C, preferably at least 60°C or at least 80°C. As used herein, the term "washing" refers to a conventional textile cleaning treatment, preferably in a washing machine. Thereby, the face mask is soaked in aqueous washing liquid, which typically comprises a detergent, and is mechanically agitated, typically for at least 10 min or at least 30 min. Preferably, washing treatment is as in DIN EN ISO 6330, which describes a standard washing treatment for textile fabrics.

Washing can have the effect that the softness of the material and the wearer comfort are improved. Thereby, the drapability of the mask can be improved, which is thus fitted more tightly and closer to the shape of the face, thereby providing a better protection. However, and without being bound by theory, it is assumed that also the uniformity of the filter medium of the invention can be specifically improved by washing, and even more by repeated washing. The multicomponent filaments are split at least partially into elementary filaments, typically by a fluid jet treatment, in which high mechanical forces act on the nonwoven. This may result in an uneven microstructure due to splitting and/or density variations. The mechanical forces during washing may level such irregularities, for example if regions having internal tension are relaxed. It is also conceivable that some residual multicomponent filaments are finally split during washing, which are still loosely adhered to each other.

In a preferred embodiment, the filter medium and/or the spun nonwoven is not electrostatically charged. In contrast, in order to achieve a desired BFE, filter media of face masks of the state of the art are typically electrostatically charged. In the art, the filter medium is typically charged by a corona treatment. Surprisingly, the inventive filter medium can have at least a comparable or even higher filtration efficiency without an electrostatic charge. This is advantageous, because electrostatically charged filter media and respective masks used in the art are generally not washable, because the electrostatic charge decreases and can even be fully lost during washing. Besides, face masks and filter media without electrostatic charge can be produced more conveniently and with lower energy consumption, and do not have the problem of discharging during storage or use.

The face mask of the invention does not comprise meltblown fibers and/or a layer of meltblown fibers. This is advantageous, because producing nonwovens and laminates from meltblown fibers is relatively complicated. Moreover, face masks in the art which comprise meltblown fibers are generally electrostatically charged. Thus, the inventive face mask can be provided with a simpler filter medium and without electrostatic charge, and does not deteriorate during washing, storage or use due to discharging.

Preferably, the filter medium does not comprise other filtering agents, which are not fibrous, such as adsorbents, such as activated carbon. Providing a filter medium which consists of only the spun nonwovens is advantageous, because it is more convenient and economic, such that rapid production of high numbers of face masks is possible.

It is another advantage of the inventive face mask, especially when prepared from polyester and polyamide filaments, that it can be sterilized in an autoclave. Due to the composition of the material, the filter medium can be sterilized in a standard sterilization autoclave at temperatures of above 120°C (according to DIN EN 285 at 134°C for at least three minutes). In contrast, conventional filter media which comprise a meltblown layer from polypropylene cannot be sterilized under conditions defined in DIN EN 285, because a significantly higher dwell time in the autoclave would be required.

In a preferred embodiment, the face mask and/or the filter medium has a bacterial filtration efficiency (BFE) according to DIN EN 14683:2019 of at least 95%, at least 98%, or preferably at least 99% or 100%. It was found that the filter medium can have such a high BFE that the face mask can fulfill the requirements for medical face masks of type I, II or even IIR. Thus, face masks of the invention can also be highly suited for medical staff. However, even face masks having lower performance can be practically relevant. For example for preventing spreading of diseases such as COVID-19, it can be reasonable to provide face masks for the public, which are not costly and available in high quantity, and which further have a high wearer comfort, but have a BFE below 95%. When facing the problem to supply large numbers of face masks, it can be more efficient to provide relatively simple masks, rather than more complicated but more efficient masks, in order to achieve a desired epidemiologic goal. Empirically, the discipline of wearers, especially from the public, can increase when the wearer comfort is high and breathing is impaired only little. Therefore, in one embodiment the face mask can have a BFE of 80% up to 95%, or at least 85% or at least 90% in another embodiment.

In a preferred embodiment, the face mask and/or the filter medium has an air permeability of at least 100 l/m²·s, preferably more than 133 l/m²·s, especially preferred more than 175 l/m²·s, determined according to EN ISO 9237:1995 at 100 Pa. Such an air permeability is relatively high for face masks having a high BFE. The standard DIN EN 14683:2019 requires that a face mask of type I and II has a differential pressure < 40 Pa/cm², which corresponds to an air permeability of > 133 l/m²s according to DIN EN ISO 9237 at 100 Pa. A low differential pressure or high air permeability means that the breathing resistance is low, thereby allowing the wearer to wear the mask for extended time periods and carry out exhaustive tasks. Preferably, the face mask has a differential pressure according to DIN EN 14683:2019 of < 40 Pa/cm², preferably less than 35 Pa/cm², more preferably less than 30 Pa/cm², or even less than 20 Pa/cm² or < 10 Pa/cm².

In a preferred embodiment, the face mask and/or filter medium fulfills the performance requirements for medical face masks of DIN EN 14683:2019, specifically of DIN EN 14683:2019, type I, type II or type IIR, preferably with regard to bacterial filtration efficiency (BFE) and/or differential pressure, preferably also regarding splash resistance and/or microbiological purity. As far as herein reference is made to the standard DIN EN 14683:2019, it is preferably DIN EN 14683:2019:6.

The splash resistance can be adjusted by known methods, for example by hydrophobizing the filter medium. Microbiological purity can be adjusted as known in the art by avoiding contaminations during production, handling and storage.

Preferably, the air permeability of the face mask and/or filter medium according to EN ISO 9237:1995-12A is at least 20 mm/s, more preferably at least 30 mm/s, determined with a test surface of 20 cm² and a differential pressure of 200 Pa, preferably as the mean value of 100 or 50 single values.

In a preferred embodiment, the spun nonwoven has an average pore size of 10 µm to 50 µm and/or a maximum pore size of 30 µm to 120 µm, when having a basis weight of 80 g/m² or 100 g/m², as determined with a pore size measuring device PSM 165 of the company TOPAS, DE, according to the provisions of the producer and/or ASTM E1294-89 and ASTM F-216-03.

In a preferred embodiment, the filter medium has a thickness of 0.1 mm to 1 mm, especially between 0.2 mm and 0.6 mm, determined according to DIN ISO 9073-2:1995, part 2, for normal nonwovens. Preferably, the filter medium and/or the spun nonwoven has a maximum tensile strength (maximum tensile force) in all directions of at least 200 N/5 cm, especially at least 250 N/5 cm, determined according to EN 13934-1. Preferably, the maximum elongation in all directions is 20% to 60%, determined according to DIN EN 13934-1.

In an embodiment, the face mask comprises at least one additional layer, which is not a filter medium. The additional layer is connected with the filter medium, over the flat area, and as the filter medium is traversed by the breathing air. The connection between the layers is typically loose, such that air gaps are present in between. The additional layer can for example be a support layer or cover layer. A support layer increases the mechanical stability of the filter medium attached thereto. A cover layer shelters the filter medium from the environment, for example from mechanical damage or moisture. The additional layer is not a filter medium, since it does not effectively remove infectious agents from the breathing air. Preferably, it consists of fibers and/or is preferably a textile layer, more preferably a nonwoven or woven fabric. The fiber diameter of such an additional layer could, for example, be above 0.1 mm or above 0.25 mm. Typically, support layers have significantly stronger (thicker) fibers than the filter medium and increase the pressure difference of the filter medium not significantly or not at all. For example, the at least one additional layer could decrease the air permeability of the filter medium by less than 10%, especially less than 5% or even less than 2%. Most importantly, the additional layer is not a filter medium for removing droplets and/or infectious agents. The additional layer can have a BFE of < 5%, especially < 2% or even about 0%. Such an additional layer could be connected to the filter medium by conventional means, such as sewing or bonding, especially in peripheral regions of the layers, especially by ultrasonic bonding.

In a preferred embodiment, the face mask does not comprise an additional layer, apart from the filter medium itself. This is advantageous, because a simple face mask can be provided from only a low number of components. It was found that such a simple face mask does not only have high filtration efficiency, but also high mechanical stability. In case of a filter medium having three or more layers, the outer layers could have the function of support and cover layers. They may comprise less fine filaments, which confer higher mechanical stability to the filter medium. Such face masks, in which the filter medium is not combined with further layers, can be produced simply, rapidly and cost-efficiently in high amounts, which is highly relevant in the case of an epidemic or pandemic.

In a preferred embodiment, the face mask has the following properties:
- The filter medium comprises at least two, preferably at least three layers of spun nonwoven,
- the filter medium has a basis weight of 60 to 200 g/m²,
- the face mask does not comprise an additional layer, and
- the face mask has a bacterial filtration efficiency (BFE) of at least 95%, preferably at least 98%, determined according to DIN EN 14683:2019.

Preferably, the face mask is a medical product, especially a mouth-nose protection (MNP), also named surgical mask, clinical mask or OP-face mask. This refers to a face half mask with a filter medium which is attached with fixation means, such as elastic bands or strips, to the back of the head or behind the ears. If desired, an integrated flexible metal frame can align the upper part of the half mask to the nasal bridge, in order to keep the field of vision free and prevent upward exhalation. After single use, the MNP could be discarded. However, it is preferred that the MNP is washable and reusable. An MSP can also be used for preventing transmission of infectious agents by the public. In a preferred embodiment, the face mask is a medical face mask, a mouth/nose protection, a folding mask, a mask basket, a filtering half mask or a comparable protection of mouth and nose.

Subject of the invention is also the use of a spun nonwoven of at least partially split multicomponent filaments as a filter medium in a face mask, especially a surgical mask, for protection against infectious agents. The spun nonwoven, which can be combined from multiple layers as described above, is therein the only filter medium in the mask.

Subject of the invention is also the use of a face mask for filtering air and/or for removing infectious agents from air during wearing. The user can be medical staff, or persons having close contact to others, such as care staff, or persons from the general public, who do not have a medical profession.

Subject of the invention is also the use or provision of the face mask for filtering air and/or for removing infectious agents during wearing by persons from the general public who do not have a medical profession, wherein for example the BFE could be in the range of > 80% up to < 95%. Such a use is especially suited for preventing the spreading of infectious agents in the public in a simple and cost-efficient manner, especially in case of an epidemic or pandemic.

The inventive face mask and uses solve the problem underlying the invention. The face mask has a simple structure and is thus available in an easy, rapid and convenient manner in high quantities. It can have high filtration efficiency (BFE) and provide at the same time high comfort to the wearer. Thereby, the air permeability can be high such that the breathing resistance is low. The face mask is reusable and washable, whereas the advantageous properties can even be improved significantly during washing.

An alternative embodiment is a face mask for protection against infectious agents with a first filter medium from spun nonwoven, which consists of multicomponent filaments, which are split at least partially into elementary filaments, wherein optionally at least one further layer is present, which is not a filter medium, wherein optionally at least one further layer is present, which is another filter medium different from the first filter medium. In order to achieve excellent filtering properties, such an additional filter medium may not in fact be required. However, it is conceivable that in some embodiments, the filtration efficiency can be optimized further by combination with another filter medium. Thus, the filter medium from multicomponent filaments can be combined with a second filter medium, such as a layer of meltblown fibers, especially from polypropylene, or a spun nonwoven from mono-component filaments, especially from polypropylene, which may be electrically charged.

### Working examples

### Materials

The filter media in examples 1 to 8 were spun nonwovens of the trademark Evolon (Freudenberg, DE), which consist of at least partially split bicomponent filaments having 16 segments in pie-shape (PIE16). The bicomponent filaments consist of 16 alternating elementary filaments of polyester (PET) and polyamide 6. The titer of the monofilaments was between 0.1 and 0.2 dtex. The spun nonwovens were produced similarly as described in example 1 of EP 3 165 655 B1. The bicomponent filaments were split and the nonwovens consolidated by water jet treatment. The spun nonwovens were not consolidated by needling. The properties are summarized in table 2 below. The ratios of PET to polyamide and basis weights were selected as indicated in the examples.

### Example 1 to 4

In examples 1 to 4, the filtration efficiency was examined in a test method for testing requirements of medical masks with aerosol particles (solid particles, 3 µm diameter). The mask or the material is converted into a disc of 48 mm diameter. The sample is placed in a tube containing the aerosol. The aerosol concentrations are measured in the tube and in the flow which has passed through the sample in the interior to exterior direction. The result is the percentage of particles stopped by the material. The air permeability of the filter media was determined according to DIN EN ISO 9237 at 100 Pa.

### Examples 1 to 3: Filtration and air permeability properties of filter media

In a first test series, the filtration properties of filter media were examined, which consisted of one, two or three layers, but had a comparable total basis weight. The results are summarized in table 2. The results demonstrate that the filter media are highly suitable for removing aerosol particles from breathing air. The results suggest that the filter media could fulfil the requirements for medical face masks according to DIN EN 14683:2019. Further, it was surprisingly demonstrated that the properties are significantly improved when using a multi-layer structure having the same total basis weight. For a multi-layer structure, a higher filtration efficiency is achieved, although the air permeability is also significantly higher. A three-layer filter medium could even achieve a filtration efficiency of 100% at a high air permeability of 195 l/m²·s at 100 Pa. This suggests a performance according to category II of the standard, wherein the air permeability is significantly higher than the required minimal level of 133 l/m²·s. The breathing resistance is low and the user has high wearer comfort combined with high protection. For a filter medium comprising two layers, the filtration efficiency was also very high with 98%, whereas the air permeability was slightly below the standard level. However, it can be safely assumed that a respective two layer filter medium with reduced thickness would fulfill the requirements of the standard. A comparable filter medium having a basis weight of 100 g/m² from only a single layer achieved a filtration efficiency of 97%, but the air permeability was 60 l/m²·s. The breathing resistance was thus below the minimal level required by the standard.

**Table 2: Summary of filter medium properties and results**

| **Example** | **1** | **2** | **3** |
|---|---|---|---|
| Basis weight total [g/m²] | 99 | 100 | 100 |
| Layers | 3 | 2 | 1 |
| Base weight of layers [g/m²] | 33 | 40 / 60 | 100 |
| Polymers | PET/PA | PET/PA | PET/PA |
| Polymer ratio | 60/40 | 60/40 | 70/30 |
| Fiber type | PIE16 | PIE16 | PIE16 |
| Air permeability at 100 Pa [l/m²s] | 195 | 122 | 60 |
| Filtration efficiency [%] | 100 | 98 | 97 |

### Example 4: Washing resistance of face mask

The washing resistance of a folded face mask was examined, which comprises the filter medium of partially split bicomponent filaments. In order to be able to examine a potential change of filtration efficiency in both directions, a filter medium was used which consisted of two layers having a basis weight of 40 g/m², respectively, which had a relatively low filtration efficiency. The properties of the filter medium are summarized in table 3 below.

**Table 3: Properties face mask with filter medium**

| **Example** | **4** |
|---|---|
| Basis weight total [g/m²] | 80 |
| Layers | 2 |
| Base weight of layers [g/m²] | 40 |
| Polymers | PET/PA |
| Polymer ratio | 60/40 |
| Fiber type | PIE16 |
| Air permeability at 100 Pa [l/m²s] | 162 |
| Filtration efficiency [%] | 95.1 |

The filtration efficiency of three face masks was determined before and after washing. The face masks were subjected to ten washing cycles at 90°C. The results are summarized in table 4. They demonstrate that the filtration efficiency was not only not decreased, but moreover was significantly improved. This is highly advantageous, because the filter medium is reusable, whereas washing even confers higher performance to the filter medium; in contrast to products in the art which have to be discarded after use.

**Table 4: Change of filtration efficiency after 10 washing cycles**

| Sample No. | filtration efficiency [%] new, before washing | filtration efficiency [%] after 10 washing cycles at 90°C |
|---|---|---|
| 1 | 85 | 91.9 |
| 2 | 84.9 | 94.1 |
| 3 | 87.1 | 94.1 |
| average | 85.7 | 93.4 |

### Examples 5 to 8

In examples 5 to 8, the performance of filter media and face masks was determined with liquid aerosols comprising *Staphylococcus aureus* according to DIN EN 14683:2019. Generally, it is more challenging to achieve a high bacterial filtration efficiency with liquid aerosols comprising bacteria than with solid particles having a respective size.

### Example 5

A three-layer filter medium consisting of three layers having a basis weight of 30 g/m² (trademark Evolon Evo30PK, Freudenberg, DE) was examined. The bacterial filtration efficiency (BFE) according to DIN EN 14683:2019 for three test specimens were 92.8%, 91.2% and 91.6%, at a mean particle size of the bacterial aerosol of 3.1 µm. The average differential pressure according to DIN EN 14683:2019, Annex C, was determined for five test specimen and was found to be 23.3, 25.4, 22.8, 28.2 and 21.9 Pa/cm². Overall, the differential pressure fulfilled the standard, whereas the BFE was slightly below the minimum level of 95% for type I face masks.

### Example 6

A filter medium as in example 5 was washed at 60°C, followed by determination of BFE and differential pressure. The BFE was 99.86% (average of 5 test specimen) and the differential pressure was 38.5 Pa/cm² (±3.0 Pa/cm², average of five specimens), both determined according to DIN EN 14683:2019. Thus, the filter medium of example 5 after washing meets the requirements of type I and type II of the standard. This shows that the performance of the inventive filter medium can be significantly improved by washing.

### Example 7

A filter medium consisting of three layers, each having a basis weight of 30 g/m² (trademark Evolon Evo30PK, Freudenberg, DE), was subjected to a single washing step. The BFE according to DIN EN 14683:2019, Annex B, was 97.84% on average. The differential pressure according to DIN EN 14683:2019, Annex C, was 31.2 Pa/cm² on average. The difference to example 6 may be due to a lower initial degree of splitting of bicomponent fibers. The result demonstrates that the BFE and differential pressure, and thus breathing comfort, can be adjusted by routine measures, such as variation of basis weight and degree of splitting.

### Example 8

The performance of a face mask was examined. The face mask comprised a filter medium consisting of four layers from split bicomponent filaments as described above, each having a basis weight of 30 g/m² (trademark Evolon Evo30PK, Freudenberg, DE), and was produced with a PFAFF production line (Pfaff, DE). The BFE according to DIN EN 14683:2019, Annex B, was 95.31% and the differential pressure according to DIN EN 14683:2019, Annex C, was 36.3 Pa/cm² (determined with five specimen, respectively). The results show that the facemask meets the requirements of DIN EN 14683:2019 for medical face masks type I. The performance can be improved significantly compared to a three-layer structure.

## Claims

1. Face mask for protection against infectious agents with a filter medium from spun nonwoven, which consists of multicomponent filaments, which are split at least partially into elementary filaments, wherein the face mask optionally comprises at least one further layer which is not a filter medium.

2. Face mask according to claim 1, wherein the filter medium comprises at least two layers, preferably at least three layers of spun nonwoven.

3. Face mask according to at least one of the preceding claims, wherein each layer of spun nonwoven has a basis weight of 10 to 100 g/m², preferably, from 20 to 60 g/m².

4. Face mask of at least one of the preceding claims, wherein the filter medium has a total basis weight of 40 to 300 g/m², preferably from 60 to 200 g/m².

5. Face mask according to at least one of the preceding claims, wherein the elementary filaments have a titer from 0.05 to 0.4 dtex.

6. Face mask according to at least one of the preceding claims, wherein the multicomponent filaments were split by fluid jet treatment.

7. Face mask according to at least one of the preceding claims, wherein the multicomponent filaments are bicomponent filaments, which have a pie-shaped structure (PIE-structure).

8. Face mask according to at least one of the preceding claims, which has been washed at least once, preferably at a temperature of at least 40°C.

9. Face mask according to at least one of the preceding claims, wherein the filter medium is not electrostatically charged.

10. Face mask according to at least one of the preceding claims, which has a bacterial filtration efficiency (BFE) of at least 95%, preferably at least 98%, determined according to DIN EN 14683:2019.

11. Face mask according to at least one of the preceding claims, which has a differential pressure of less than 40 Pa/cm², preferably less than 30 Pa/cm², determined according to DIN EN 14683:2019, and/or which has an air permeability of at least 100 l/m²·s determined according to EN ISO 9237:1995 at 100 Pa.

12. Face mask according to at least one of the preceding claims with the following features:
- The filter medium comprises at least two layers of spun nonwoven,
- the filter medium has a basis weight of 60 to 200 g/m²,
- the face mask does not comprise an additional layer, and
- the face mask has a bacterial filtration efficiency (BFE) of at least 98%, determined according to DIN EN 14683:2019.

13. Face mask according to at least one of the preceding claims, which is a medical face mask, a mouth and nose protection, a folding mask, a mask basket, a filtering half mask, or a comparable protection of mouth and nose.

14. Use of a face mask according to at least one of the preceding claims for filtering air and/or for removing infectious agents from air during wearing.

15. Use of a spun nonwoven of at least partially split multicomponent filaments as a filter medium of a face mask for protection against infectious agents.
